# EUROPEAN PATENT SPECIFICATION

(11) **EP 3 985 180 B1**
(45) Date of publication and mention of the grant of the patent: **17.12.2025**
(21) Application number: 21203324.5
(22) Date of filing: 19.10.2021
(51) Int. Cl.: E02F 9/20, G05G 9/047, A01B 69/00

(54) **IMPROVED MULTIFUNCTION JOYSTICK FOR A WORK VEHICLE**
VERBESSERTER MULTIFUNKTIONS-JOYSTICK FÜR EIN ARBEITSFAHRZEUG
LEVIER DE COMMANDE MULTIFONCTION AMÉLIORÉ POUR UN VÉHICULE DE TRAVAIL

(30) Priority: 19.10.2020 IT 202000024610
(43) Date of publication of application: 20.04.2022
(73) Proprietor: CNH Industrial Italia S.p.A., 10156 Torino (IT)
(72) Inventor: PUTZ, Markus, 3352 Sankt Peter in der Au (AT)
(74) Representative: CNH Industrial IP Department

(56) References cited:
- EP-A2- 2 311 710
- EP-A2- 3 211 505
- EP-B1- 2 311 710
- CA-A1- 2 355 057
- DE-A1- 19 949 802
- US-A1- 2002 140 568
- US-A1- 2011 032 219
- US-A1- 2019 301 130
- US-A1- 2020 081 478

## Description

### TECHNICAL FIELD

The present invention concerns a joystick for a work vehicle, in particular a multifunction joystick for a work vehicle such as an agricultural vehicle or an earth-moving machine.

### BACKGROUND OF THE INVENTION

Work vehicle such as agricultural vehicles, e.g. a tractor, comprises a plurality of operational elements such as the three-point hitch, rear valves, power take off modules that can be controller by the driver to perform respective work activities.

Similar situation is present on an earth moving machines wherein the driver may activate blades/ buckets or other operational elements.

The control of such operational elements is provided via respective joysticks or via a single joystick which function is changed via a control monitor or buttons on a dashboard of the vehicle as shown in CA2355057A1 or US2020/081478.

Clearly, such modulation operation is complicated and time consuming and may lead to error from the driver. Moreover, the use of a control monitor of the insertion of buttons on the dashboard is clearly an increasing of costs for the manufacturer.

Therefore, the need is felt to reduce the costs for providing a joystick configured to allow the control of a plurality of operations in a work vehicle.

An aim of the present invention is to satisfy the above mentioned needs in a cost effective and compact way.

### SUMMARY OF THE INVENTION

The aforementioned aim is reached by a joystick and a vehicle as claimed in the appended independent claims.

Preferred embodiments of the invention are realized according to the claims dependent on or related to the above independent claim.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view showing the interior of a work vehicle provided with a joystick according to the invention;
- Figure 2 is a perspective view of the joystick according to the invention;
- Figure 3 is a front view of the joystick of figure 2; and
- Figures 4a-4c are respective partial view of an upper portion of the joystick of figure 3 in different operative conditions.

### DETAILED DESCRIPTION OF THE INVENTION

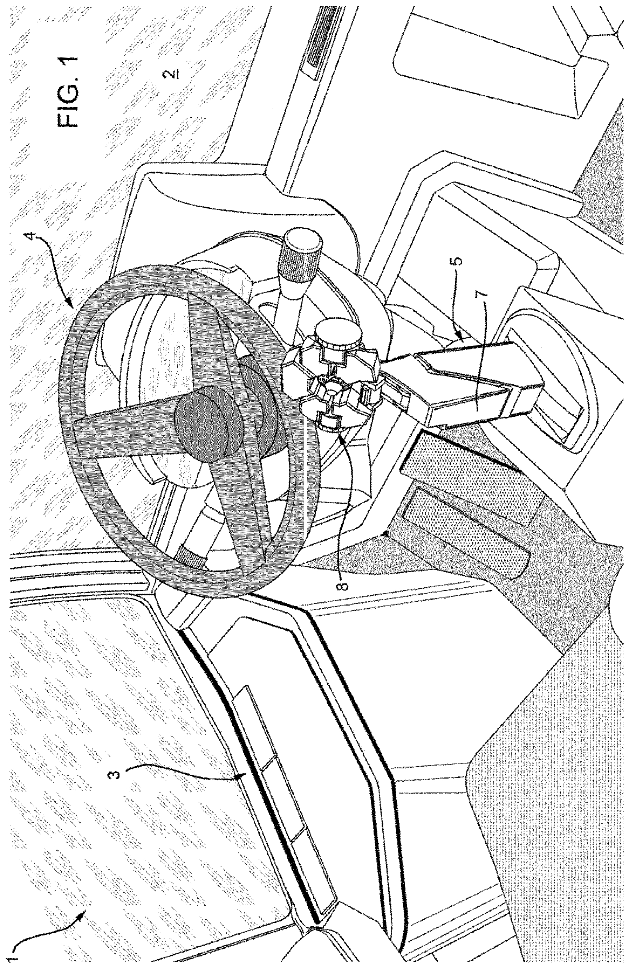

Figure 1 discloses the interior space 2 of a work vehicle 1 disclosed only partially for sake of clarity.

As per se known, the work vehicle 1 comprises a driving seat 3 in face of command means 4, e.g. a steering system and brake pedals. The vehicle comprises a joystick 5 for operating operational elements of this latter, hereby not shown, such as the three-point hitch, rear valves, power take off modules that can be controlled by the driver to perform a specific work activity.

The joystick 5 may be placed laterally with respect to the driving seat 3 and supported by a dashboard 6 in order to improve the ergonomic during its use but it is clear that can be positioned everywhere in the inner space 2 of the work vehicle 1.

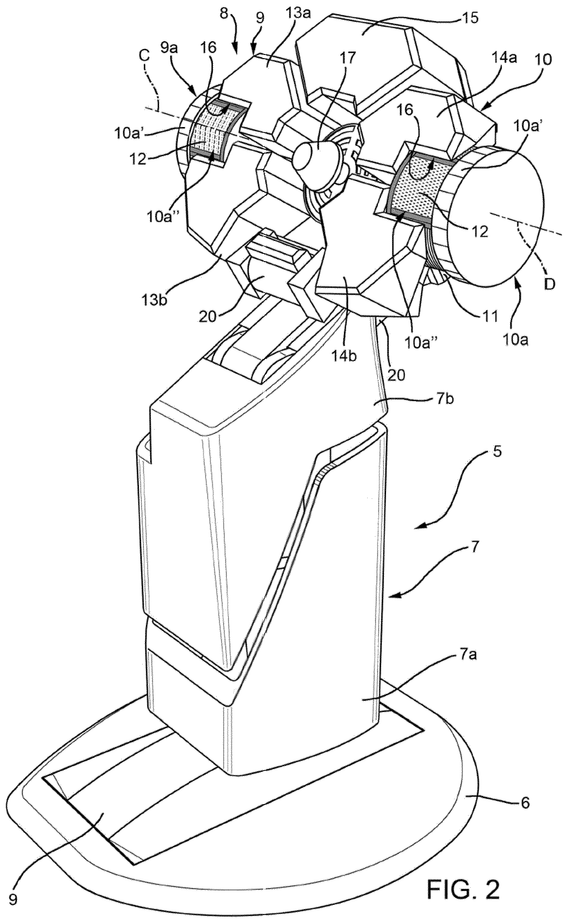

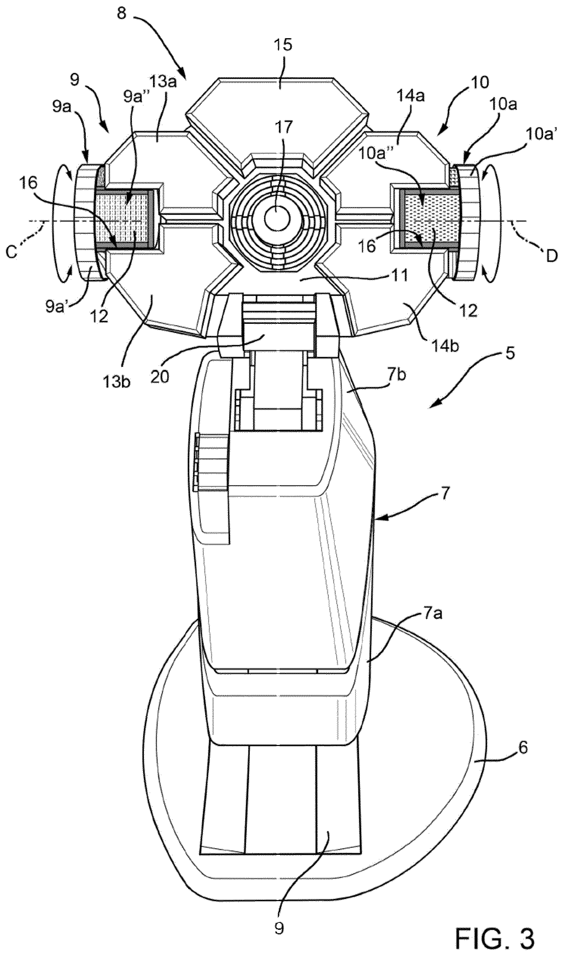

Referring to figures 2 and 3, the joystick 5 according to the present invention comprises a support body 7 defining a handling for the driver. According to the illustrated embodiment, the support body 7 has a substantially parallelepiped shape extending in a substantially vertical direction from dashboard 6 and comprises a base portion 7a configured to be carried by the dashboard 6 and a terminal portion 7b, opposed to the base portion 7a and carrying a selector module 8 as described hereinafter.

Optionally, the base portion 7a is carried in a movable manner by the dashboard 6 e.g. via a guide 9 realized in the dashboard 6 into which the base portion 7a may slide in order to regulate its position for improving the ergonomic of the joystick 5.

Further, optionally, the support body 7 may be realized into two portions, e.g. a lower portion 7' defining base portion 7a and an upper portion 7'' defining the terminal portion 7b. Such lower and upper portions 7', 7'' defines together the handling surface that can be used by the driver to move the joystick and preferably, they can move relatively to each other to adjust the total height of the support body 7. Also in this case, the height of support 7 is regulated to increase the ergonomic of the joystick 5.

The selector module 8 comprises essentially a first and a second selectors 9, 10, as exemplarily shown a left selector 9 and a right selector 10, configured to allow the selection of a plurality of different operations that may be controlled by the driver via joystick 5.

In particular, the first and second selectors 9, 10 are mechanical selectors and are supported via a support portion 11 that is carried by terminal portion 8b of support body 7. Advantageously, the support portion 11 is carried in an adjustable manner by support body 7 so as to assume different longitudinal positions so as to increase the ergonomic of joystick 5.

Each selector 9, 10 advantageously comprise a selection wheel 9a, 10a carried in a rotatably free manner about respective axis C, D by the support portion 11. Preferably, axis C and D are coincident between each other.

Moreover, each selection wheel 9a, 10a defines on its outer surface a plurality of indicators 12. Preferably, the selection wheel 9a, 10a define the same number of indicators 12 on their surfaces and in the exemplarily shown embodiment they define each six different indicators 12.

Each indicator 12 correspond to a specific operation that may be controlled by by the driver as set forward. In particular, the each indicator 12 represents an operative function that can be selected by the driver when such indicator 12 is a predetermined position with respect to support 7.

Preferably each indicator 12 can be realized as a different color provided on the outer surface of the selection wheel 9a, 10a or by a graphical symbol realized on this latter. A texture or a relief symbol may be further provided in substitution or in combination with the aforementioned colors or graphical symbols to better define the above mentioned specific operation.

Each selection wheel 9a, 10a preferably comprises a gripping portion 9a', 10a' and an indication portion 9a'', 10a''. The gripping portion 9a', 10a' has a diameter greater with respect to the indication portion 9a", 10a'' to allow an easier rotation of the selection wheel 9a, 10a and, preferably, defines on the outer surface a gripping texture to further facilitate such rotation.

Each selector 9, 10 furthermore comprise an enable button 13b, 14b and a disable button 13a, 14a configured to respectively allow or inhibit the selected operation by the indicator 12. According to the shown embodiment, each enable button 13b, 14b is place vertically below the respective selection wheel 9a, 10a and each disable button 14a, 14a is placed vertically above the respective selection wheel 9a, 10a.

Preferably, the enable buttons and the disable buttons 13b, 14b and 13a, 14a are arranged adjacent to be adjacent one with respect to the other on one side. On such side the enable buttons and the disable buttons 13b, 14b and 13a, 14a have a shape configured to define a seat 16 configured to house the respective selection wheel 9a, 10a, in particular to house the indication portion 9a", 10a''.

According to the above and the disclosed exemplarily embodiment, the selector module 8 has substantially an hexagonal shape that is symmetrical with respect to a transversal plane dividing the selector module 8 into a left part provided with left selection wheel 9a, and buttons 13a, 13b and a right part provided with right selection wheel 10a and buttons 143a, 14b.

Advantageously, selector module 8 may further comprise a further button 15 configured to control a specific base operation of the work vehicle, such as a guidance engage.

More preferably, such further button 15 has a shape that is complementary, i.e. making par, with the aforementioned hexagonal shape of the selector module 8. In other words, one side of button 15 represents one side of the hexagonal shape of the selector module 8.

Preferably, the selector module 8 comprises a configurable stick 17 that is movable with respect to support portion 11 and configured to control any function as detailed hereinafter. In particular, the configurable stick 17 is carried in the center of selector module 8 in a respective space delimited by button 15, upwards, and buttons 13b, 14b and 13a, 14a laterally. More preferably, configurable stick 17 is configured to move in four different directions with respect to its fixation point to control the aforementioned function.

Optionally, joystick 5 may comprise at least a detent 20 configured to control a remote proportional valve. In particular, the shown joystick 5 comprise a front and right detents carried by support portion 11 of the selector module 8 and configured to control two different remote valves of the work vehicle.

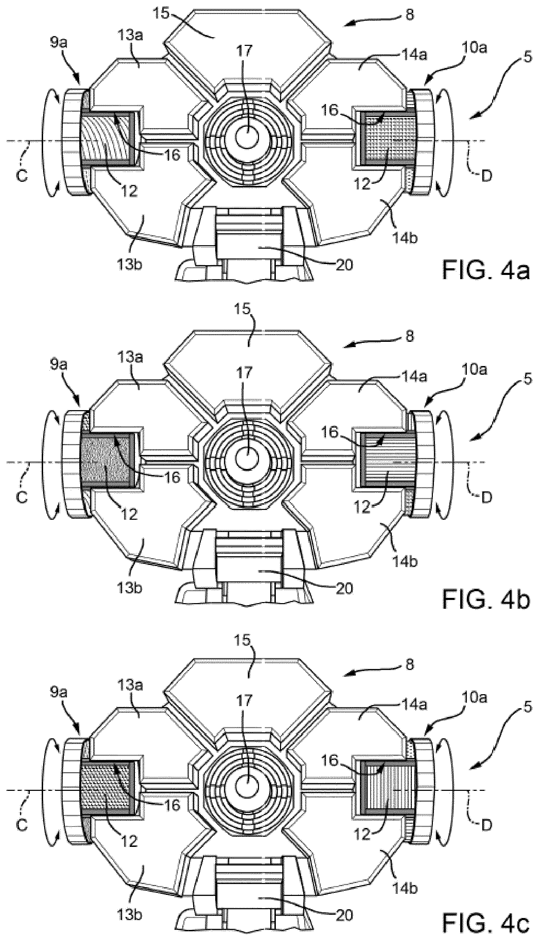

The operation of the above described joystick 5 according to the invention is the following, making reference to figures 4a, 4b and 4c.
- According to figure 4a a first couple of control operations are selected via selections wheels 9a, 10, according to figures 4b, by rotating of 60° these latter, further two operative functions are selected. Similarly, as depicted in figure 4c, a further rotation of 60° of selections wheels 9a, 10a allows the choice of further two different operative functions.

Accordingly, the driver may choose between a combination of thirty different combinations of different controls, i.e. by choosing six different functions from each selector 9, 10.

The operations that may be controlled may be of any different typology and advantageously can be selected by the following group of operations:
- Control of a rear three point hitch of the work vehicle;
- Control of the front three point hitch of the work vehicle;
- Control of a front first or second rear remote valve;
- Control of a rear first or second rear remote valve;
- Control of a rear power take off (PTO) of the work vehicle;
- Control of a front power take off (PTO) of the work vehicle;
- Other operational functions such as "easy tronic function A+B" or "easy tronic function C+D". As known such functions are commercially known as record and play repeated functions or operations on the headland.

The association of each indicator 12 with the above described operations can be fixed or may be varied according to driver's preferences. In particular, the work vehicle 1 may be provided with an electronic unit (not shown), e.g. a control monitor or any equivalent device, configured to customize the association of each indicator 12 with a specific operation.

Furthermore, the control unit can control the association

In addition, the further button 15, the configurable stick 17 or the detents 20 may be used for control some of the above listed operations of the work vehicle or the ones mentioned in the description.

In view of the foregoing, the advantages of a joystick 5 according to the invention are apparent.

The driver is allowed to change the operations that may be controlled by the joystick in a simple and cost-effective way, i.e. simply by using its fingers.

Indeed, the use of control monitors for changing the operation controlled by the buttons 13b, 14b and 13a, 14a of joystick 5 may be avoided.

Moreover, the proposed geometry is particularly compact and ergonomic and allows a quick use by the driver.

The use of indicators 12 allows a quick and immediate association with a specific operation, thereby making the change easy and quick by the driver.

It is clear that modifications can be made to the described joystick 5 which do not extend beyond the scope of protection defined by the claims.

For example, the shape of support body 7 or of selectors 9, 10 may be varied according to the typology and dimensions of the joystick 5. Similar consideration may apply to selection wheels 9a, 10a or to buttons 13a, 13b, 14a, 14b or further to support portion 11.

Moreover, it is clear that the number of operations that may be controlled may vary in function of the typology of work vehicle.

## Claims

1. Joystick (5) for a work vehicle (1) comprising a support portion (7) configured to be handled by a user of said vehicle (1), said support portion (7) comprising a base portion (7a) configured to be coupled to a portion (6) of said work vehicle (1) and a terminal portion (7b), said joystick (5) comprising a selector module (8) carried by said terminal portion (7b), said selector module (8) comprising at least two selectors (9, 10) configured to allow the selection of a plurality of different operations that may be controlled by the driver via joystick (5), the joystick (5) is **characterized in that** each selector (9, 10) comprises a selection wheel (9a, 10a) carried in a rotatable free manner about a respective axis (C, D) with respect to said support (7), each selection wheel (9a, 10a) defining an indicator (12) representing an operative function that can be selected by the driver when such indicator (12) is a predetermined position with respect to said support (7).

2. Joystick according to claim 1, wherein both selection wheel (9a, 10a) define the same number of indicators (12).

3. Joystick according to claim 1 or 2, wherein each indicator (12) is a surface that comprises a graphical texture and/or color and/or symbol associated to a specific operation of said work vehicle (1).

4. Joystick according to any of claims 1 to 3, wherein said axis (C, D) are coaxial.

5. Joystick according to any of claims 1 to 4, wherein each selection wheel (9a, 10a) comprises a gripping portion (9a', 10a') configured to allow the movement of the respective selection wheel (9a, 10a) and an indication portion (9a'', 10a'') configured to define said indicator (12).

6. Joystick according to any of the preceding claims, comprising an enable button (13b, 14b) and a disable button (13ba, 14a) for each of said selectors (9, 10), said enable and disable buttons being configured to allow or inhibit the control of the selected function selected by said selectors (9, 10).

7. Joystick according to any of the preceding claims, wherein said selector module (8) comprises a support portion (11) carried in an adjustable manner by said support body (7).

8. Joystick according to any of the preceding claims, comprising a further button (15) configured to control a settable specific operation of said work vehicle.

9. Joystick according to any of the preceding claims, further comprising at least a detent (20) configured to control the operation of a valve of said work vehicle.

10. Joystick according to any of the preceding claims, further comprising a configurable stick (17) configured to control a settable specific operation of said work vehicle.

11. Joystick according to claim 10, when depending on claims 6 or 8, wherein said configurable stick (17) is carried centrally with respect to said buttons (13a, 14a, 13b, 14b; 15b).

12. Joystick according to any of the preceding claims, comprising an electronic control unit configured to customize the association of each indicator (12) with a specific operation of said work vehicle.

13. Joystick according to claim 12 wherein when depending on claim 9, said electronic control unit is configured to customize the association of said detent (20) with a specific operation of said work vehicle, or wherein when depending on claim 8, said electronic control unit is configured to customize the association of said further button (15) with a specific operation of said work vehicle, or wherein when depending on claim 10, said electronic control unit is configured to customize the association of said configurable stick (17) with a specific operation of said work vehicle.

14. Work vehicle (1) comprising a joystick (5) according to any of the preceding claims.

## Patentansprüche

1. Joystick (5) für ein Arbeitsfahrzeug (1) mit einem Stützabschnitt (7), der dazu eingerichtet ist, von einer Bedienperson des Fahrzeugs (1) gehandhabt zu werden, wobei der Stützabschnitt (7) einen Basisabschnitt (7a), dazu eingerichtet, mit einem Abschnitt (6) des Arbeitsfahrzeugs (1) gekoppelt zu werden, und einen Endabschnitt (7b) aufweist, wobei der Joystick (5) ein Auswahlmodul (8) aufweist, getragen von dem Endabschnitt (7b), wobei das Auswahlmodul (8) mindestens zwei Auswahlmittel (9, 10) aufweist, dazu eingerichtet, die Auswahl einer Vielzahl verschiedener Operationen zu ermöglichen, die durch den Fahrer über den Joystick (5) gesteuert werden können,
**dadurch gekennzeichnet, dass**
jedes Auswahlmittel (9, 10) ein Auswahlrad (9a, 10a) aufweist, das frei drehbar um eine jeweilige Achse (C, D) bezüglich des Stützabschnitts (7) getragen ist, wobei jedes Auswahlrad (9a, 10a) einen Indikator (12) definiert, der eine durch den Fahrer auswählbare Betriebsfunktion darstellt, wenn sich der Indikator (12) in einer vorbestimmten Position relativ zu dem Stützabschnitt (7) befindet.

2. Joystick nach Anspruch 1, wobei beide Auswahlräder (9a, 10a) die gleiche Anzahl an Indikatoren (12) definieren.

3. Joystick nach Anspruch 1 oder 2, wobei jeder Indikator (12) eine Oberfläche ist, die eine grafische Textur und/oder Farbe und/oder ein Symbol aufweist, das einem bestimmten Betrieb des Arbeitsfahrzeugs (1) zugeordnet ist.

4. Joystick nach einem der Ansprüche 1 bis 3, wobei die Achsen (C, D) koaxial sind.

5. Joystick nach einem der Ansprüche 1 bis 4, wobei jedes Auswahlrad (9a, 10a) einen Greifabschnitt (9a', 10a'), dazu eingerichtet, die Bewegung des jeweiligen Auswahlrads (9a, 10a) zu ermöglichen, und einen Anzeigeabschnitt (9a", 10a") aufweist, dazu eingerichtet, den Indikator (12) zu definieren.

6. Joystick nach einem der vorhergehenden Ansprüche, der einen Aktivierungsknopf (13b, 14b) und einen Deaktivierungsknopf (13a, 14a) für jedes der Auswahlmittel (9, 10) aufweist, wobei die Aktivierungs- und Deaktivierungsknöpfe dazu eingerichtet sind, die Steuerung der durch die Auswahlmittel (9, 10) ausgewählten Funktion zu erlauben oder zu sperren.

7. Joystick nach einem der vorhergehenden Ansprüche, wobei das Auswahlmodul (8) einen Stützabschnitt (11) aufweist, der verstellbar von dem Stützkörper (7) getragen ist.

8. Joystick nach einem der vorhergehenden Ansprüche, der einen weiteren Knopf (15) aufweist, der dazu eingerichtet ist, einen einstellbaren bestimmten Betrieb des Arbeitsfahrzeugs zu steuern.

9. Joystick nach einem der vorhergehenden Ansprüche, der des Weiteren mindestens eine Raststellung (20) aufweist, die dazu eingerichtet ist, die Betätigung eines Ventils des Arbeitsfahrzeugs zu steuern.

10. Joystick nach einem der vorhergehenden Ansprüche, der des Weiteren einen konfigurierbaren Steuerknopf (17) aufweist, der dazu eingerichtet, einen einstellbaren bestimmten Betrieb des Arbeitsfahrzeugs zu steuern.

11. Joystick nach Anspruch 10, wenn abhängig von Anspruch 6 oder 8, wobei der konfigurierbare Steuerknopf (17) zentral relativ zu den Knöpfen (13a, 14a, 13b, 14b; 15b) getragen ist.

12. Joystick nach einem der vorhergehenden Ansprüche, der eine elektronische Steuereinheit aufweist, die dazu eingerichtet ist, die Zuordnung jedes Indikators (12) zu einem bestimmten Betrieb des Arbeitsfahrzeugs anzupassen.

13. Joystick nach Anspruch 12, wenn abhängig von Anspruch 9, wobei die elektronische Steuereinheit dazu eingerichtet ist, die Zuordnung der Raststellung (20) zu einem bestimmten Betrieb des Arbeitsfahrzeugs anzupassen, oder wobei, wenn abhängig von Anspruch 8, die elektronische Steuereinheit dazu eingerichtet ist, die Zuordnung des weiteren Knopfs (15) zu einem bestimmten Betrieb des Arbeitsfahrzeugs anzupassen, oder wobei, wenn abhängig von Anspruch 10, die elektronische Steuereinheit dazu eingerichtet ist, die Zuordnung des konfigurierbaren Steuerknopfs (17) zu einem bestimmten Betrieb des Arbeitsfahrzeugs anzupassen.

14. Arbeitsfahrzeug (1) aufweisend einen Joystick (5) nach einem der vorhergehenden Ansprüche.

## Revendications

1. Joystick (5) pour un véhicule de travail (1) comprenant un élément de support (7) configuré pour être manipulé par un utilisateur dudit véhicule (1), ledit élément de support (7) comprenant une partie de base (7a) configurée pour être couplée à une partie (6) dudit véhicule de travail (1) et une partie terminale (7b), ledit joystick (5) comprenant un module sélecteur (8) soutenu par ladite partie terminale (7b), ledit module sélecteur (8) comprenant au moins deux sélecteurs (9, 10) configurés pour permettre la sélection d'une pluralité d'opérations différentes pouvant être commandées par le conducteur par le biais du joystick (5), le joystick (5) étant **caractérisé en ce que** chaque sélecteur (9, 10) comprend une molette de sélection (9a, 10a) soutenue de manière rotative libre autour d'un axe respectif (C, D) par rapport audit support (7), chaque molette de sélection (9a, 10a) définissant un indicateur (12) représentant une fonction opérationnelle qui peut être sélectionnée par le conducteur lorsque cet indicateur (12) se trouve dans une position prédéterminée par rapport audit support (7).

2. Joystick selon la revendication 1, dans lequel les deux molettes de sélection (9a, 10a) définissent le même nombre d'indicateurs (12).

3. Joystick selon la revendication 1 ou la revendication 2, dans lequel chaque indicateur (12) est une surface qui comprend une texture graphique et/ou une couleur et/ou un symbole associé à une opération spécifique dudit véhicule de travail (1).

4. Joystick selon l'une quelconque des revendications 1 à 3, dans lequel lesdits axes (C, D) sont coaxiaux.

5. Joystick selon l'une quelconque des revendications 1 à 4, dans lequel chaque molette de sélection (9a, 10a) comprend une partie de préhension (9a', 10a') configurée pour permettre le mouvement de la molette de sélection respective (9a, 10a) et une partie d'indication (9a", 10a") configurée pour définir ledit indicateur (12).

6. Joystick selon l'une quelconque des revendications précédentes, comprenant un bouton d'activation (13b, 14b) et un bouton de désactivation (13ba, 14a) pour chacun desdits sélecteurs (9, 10), lesdits boutons d'activation et de désactivation étant configurés pour permettre ou empêcher le contrôle de la fonction sélectionnée par lesdits sélecteurs (9, 10).

7. Joystick selon l'une quelconque des revendications précédentes, dans lequel ledit module sélecteur (8) comprend un élément de support (11) soutenu de manière réglable par ledit corps de support (7).

8. Joystick selon l'une quelconque des revendications précédentes, comprenant un bouton supplémentaire (15) configuré pour commander une opération spécifique réglable dudit véhicule de travail.

9. Joystick selon l'une quelconque des revendications précédentes, comprenant en outre au moins un mécanisme d'arrêt (20) configuré pour commander le fonctionnement d'une vanne dudit véhicule de travail.

10. Joystick selon l'une quelconque des revendications précédentes, comprenant en outre un levier configurable (17) configuré pour commander une opération spécifique réglable dudit véhicule de travail.

11. Joystick selon la revendication 10, en fonction des revendications 6 ou 8, dans lequel ledit levier configurable (17) est placé au centre par rapport auxdits boutons (13a, 14a, 13b, 14b, 15b).

12. Joystick selon l'une quelconque des revendications précédentes, comprenant une unité de commande électronique configurée pour personnaliser l'association de chaque indicateur (12) à une opération spécifique dudit véhicule de travail.

13. Joystick selon la revendication 12, dans lequel, lorsqu'il dépend de la revendication 9, ladite unité de commande électronique est configurée pour personnaliser l'association dudit mécanisme d'arrêt (20) avec une opération spécifique dudit véhicule de travail, ou dans lequel, lorsqu'il dépend de la revendication 8, ladite unité de commande électronique est configurée pour personnaliser l'association dudit bouton supplémentaire (15) avec une opération spécifique dudit véhicule de travail, ou dans lequel, selon la revendication 10, ladite unité de commande électronique est configurée pour personnaliser l'association dudit levier configurable (17) avec une opération spécifique dudit véhicule de travail.

14. Véhicule de travail (1) comprenant un joystick (5) selon l'une quelconque des revendications précédentes.
